# EUROPÄISCHE PATENTSCHRIFT

(11) **EP 0 945 290 B1**
(45) Veröffentlichungstag und Bekanntmachung des Hinweises auf die Patenterteilung: **06.04.2005**
(21) Anmeldenummer: 99103839.9
(22) Anmeldetag: 27.02.1999
(51) Int. Cl.: B60H 1/00, F25B 29/00, F25B 41/04, F25B 9/00, F25B 13/00

(54) **Verfahren und Vorrichtung zum Heizen und Kühlen eines Nutzraumes eines Kraftfahrzeuges**
Method and device for heating and cooling a utility space of an automotive vehicle
Procédé et dispositif de chauffage et de refroidissement pour un espace utile d'un véhicule automobile

(30) Priorität: 27.03.1998 DE 19813673
(43) Veröffentlichungstag der Anmeldung: 29.09.1999
(73) Patentinhaber: DaimlerChrysler AG, 70567 Stuttgart (DE)
(72) Erfinder: Cäsar, Roland, 70378 Stuttgart (DE); Skupin, Klaus, 73274 Notzingen (DE); Wertenbach, Jürgen, 70734 Fellbach (DE)

(56) Entgegenhaltungen:
- DE-A- 3 318 025
- DE-A- 3 510 776
- US-A- 5 172 563
- US-A- 5 245 836
- US-A- 5 375 427
- PATENT ABSTRACTS OF JAPAN vol. 1998, no. 06, 30. April 1998 (1998-04-30) & JP 10 054617 A (TOSHIBA CORP), 24. Februar 1998 (1998-02-24)
- PATENT ABSTRACTS OF JAPAN vol. 1997, no. 10, 31. Oktober 1997 (1997-10-31) & JP 09 145184 A (HITACHI LTD), 6. Juni 1997 (1997-06-06)

## Beschreibung

Die Erfindung betrifft ein Verfahren und eine Vorrichtung zum Heizen und Kühlen eines Nutzraumes.

In der EP 0 424 474 B1 ist ein Verfahren und eine Vorrichtung zum Betreiben eines transkritischen Dampfkompressionskreislaufes beschrieben. Dabei sind ein Kompressor, ein Kühler, eine Expansionseinheit und ein Verdampfer in Serie über Kältemittel führende Leitungen miteinander verbunden und bilden einen integralen Kreislauf für das Kältemittel. In diesem Kreislauf liegt der Druck auf der Hochdruckseite oberhalb des kritischen Druckes des Kältemittels.

Das Verfahren weist jedoch den Nachteil auf, daß die Regelung der Kälteleistung durch eine Veränderung der spezifischen Enthalpie des Kältemittels über eine Variation des Druckes und/oder der Temperatur erfolgt. Mittels der in der EP 0 424 474 B1 beschriebenen Lösung ist eine effiziente Leistungsregelung mit einem überkritischen Prozeßdruck kaum durchführbar, da Einflüsse aus der Umgebung wie beispielsweise die Außentemperatur, Luftfeuchte, Sonneneinstrahlung etc. die Regelung der Kälteleistung über verschieden große Enthalpiedifferenzen am Verdampfer empfindlich stören und für diese Leistungsregelung ein erheblicher Regelungsaufwand erforderlich ist.

In der Offenbarung JP-A-10 054 617, ist ein transkritischer Klimatisierungskreislauf beschrieben.

In der DE 44 32 272 C2 wird ein Verfahren zum Betreiben einer Kälteerzeugungsanlage für das Klimatisieren von Fahrzeugen dargestellt. Die Kälteerzeugungsanlage umfaßt als Kreislaufkomponenten einen Verdichter, einen Wärmetauscher, eine Expansionseinheit und einen Verdampfer, die in Reihe geschaltet sind und einen integralen geschlossenen Kreislauf für das Kältemittel bilden. Für die Erzeugung von Kälteleistung wird der Kreislauf auf der Hochdruckseite mit überkritischem Druck und gleichzeitig auf der Niederdruckseite mit unterkritischem Prozeßdruck betrieben. Dabei wird dem Kältemittel auf der Hochdruckseite Wärmeenergie zugeführt. Der Massenstrom des Kältemittels im Kreislauf wird durch Regelung des Durchsatzes des Kältemittels im Verdichter variiert.

Nachteilig ist dabei jedoch, daß mit diesem Verfahren der Nutzraum eines Fahrzeuges nur bedingt klimatisiert werden kann, da der dem Nutzraum zuzuführenden Nutzraumluftstrom im wesentlichen nur Wärmeenergie entzogen werden kann und mit dieser Kälteerzeugungsanlage nur eine Kühlung des Nutzraumes durchführbar ist.

Der vorliegenden Erfindung liegt daher die Aufgabe zugrunde, einen im wesentlichen transkritisch arbeitenden Kältemittelkreislauf für die Klimatisierung von Fahrzeugen dahingehend zu erweitern, daß die auf die Nutzraumluft übertragene Wärmeleistung effizient, komfortabel und auf einem geeigneten Temperaturniveau bereitgestellt wird, und ein modernes Fahrzeugkonzept für die Klimatisierung eines Innenraumes eines Kraftfahrzeuges bereitzustellen, welches nahezu unabhängig vom Betriebszustand der Brennkraftmaschine und von Einflüssen aus der Umgebung wie beispielsweise der Außentemperatur, Luftfeuchte, Sonneneinstrahlung etc. eine bedarfsgerechte Kühl- oder Heizleistung zur Verfügung stellt.

Erfindungsgemäß wird diese Aufgabe durch die im Verfahrensanspruch 1 genannten Verfahrensschritte sowie durch die im Vorrichtungsanspruch 8 genannten Merkmale gelöst.

Durch das erfindungsgemäße Verfahren wird der Massenstrom des Kreislaufmediums abhängig von der geforderten Heizleistung und der angebotenen Wärmemenge der Umgebung und/oder der Abwärme der Brennkraftmaschine in vorteilhafter Weise bedarfsgerecht variiert, so daß die gemäß dem Stand der Technik für die Kühlung fest installierte Klimaanlage einfach zur Beheizung des Innenraumes des Kraftfahrzeuges nutzbar wird.

Weiter ist von Vorteil, daß nur die für eine komfortable Beheizung unbedingt notwendige Verdichterleistung aufgenommen wird und die Temperatur des Kreislaufmediums im Innenraum-Wärmetauscher derart auf einem Temperaturniveau gehalten wird, daß eine geeignete Temperatur der Nutzraumluft für einen verkehrssicheren Betrieb des Kraftfahrzeuges sichergestellt ist.

In vorteilhafter Weise wird bei der Verwendung der erfindungsgemäßen Vorrichtung zum Heizen eines Nutzraumes eines Kraftfahrzeuges das Kreislaufmedium nacheinander in der Drosseleinrichtung auf einen unterkritischen Prozessdruck expandiert, in dem Umgebungswärmetauscher und/oder dem Abgaswärmetauscher erwärmt, in dem Verdichter auf einen überkritischen Prozeßdruck verdichtet und im Innenraum-Wärmetauscher mit kalter Nutzraumluft abgekühlt, so daß der Nutzraum mit der erwärmten Nutzraumluft beheizt werden kann.

Ein weiterer Vorteil des Betriebes des Kreislaufes unter überkritischen Prozessbedingungen liegt darin, daß im Innenraum-Wärmetauscher kein Phasenwechsel des Kreislaufmediums stattfindet, sondern daß das Kreislaufmedium permanent im überkritischen Bereich durch den Innenraum-Wärmetauscher geführt wird und somit eine wesentlich höhere Wärmemenge von dem Kreislaufmedium auf die Nutzraumluft übertragen werden kann. Dem Kreisprozeß liegt eine wesentlich höhere Leistungsziffer zugrunde als konventionellen Kreisprozessen, welche im unterkritischen Bereich betrieben werden.

Durch die Durchsatzregelung bzw. -steuerung des Verdichters in Kombination mit der Wärmeaufnahme durch den Umgebungswärmetauscher besteht die Möglichkeit flexibel und schnell auf gewünschte Temperaturänderungen der Nutzraumluft im Nutzraum zu reagieren bzw. äußere Einflüsse wie beispielsweise intensive Sonneneinstrahlung zu kompensieren.

Besonders vorteilhaft ist bei einem überkritischen Prozeß, daß mit den aus dem Stand der Technik bekannten und dimensionierten Wärmetauschern eine wesentlich höhere Wärmemenge von dem Kreislaufmedium auf die dem Nutzraum zuzuführende Nutzraumluft übertragen werden kann, da das Kreislaufmedium bei einer wesentlich höheren Temperatur durch den Innenraum-Wärmetauscher geführt wird. Damit ist gewährleistet, daß bereits vorhandene aus dem Stand der Technik bekannte Komponenten ohne konstruktive Änderungen verwendet werden können.

Durch die erfinderische Anordnung der Komponenten wird ein thermodynamischer Kreislaufprozeß ermöglicht, bei dem die Heizleistung auf einfache Art und Weise unter nahezu allen Betriebszuständen der Brennkraftmaschine in ausreichendem Maße zur Verfügung gestellt werden kann.

Darüber hinaus kann auf die serienmäßig vorgesehene Fahrzeugzusatzheizung verzichtet werden, womit eine Gewichtsreduktion und damit eine Verringerung des Kraftstoffverbrauches des Kraftfahrzeuges in vorteilhafter Weise erzielbar ist.

Vorteilhafte Weiterbildungen und Ausgestaltungen der Erfindung ergeben sich aus den Unteransprüchen und aus dem nachfolgend anhand der Zeichnung prinzipmäßig beschriebenen Ausführungsbeispiel.

Es zeigt:
- Fig. 1: eine schematisierte Darstellung einer Vorrichtung zum Heizen und Kühlen eines Nutzraumes eines Kraftfahrzeuges;
- Fig. 2: ein Enthalpie-Druck-Diagramm eines unter transkritischen Prozessbedingungen betriebenen Dampfkompressionskreislaufes; und
- Fig. 3: eine Ausführung des Expansionsventiles als kombiniertes Expansionsventil.

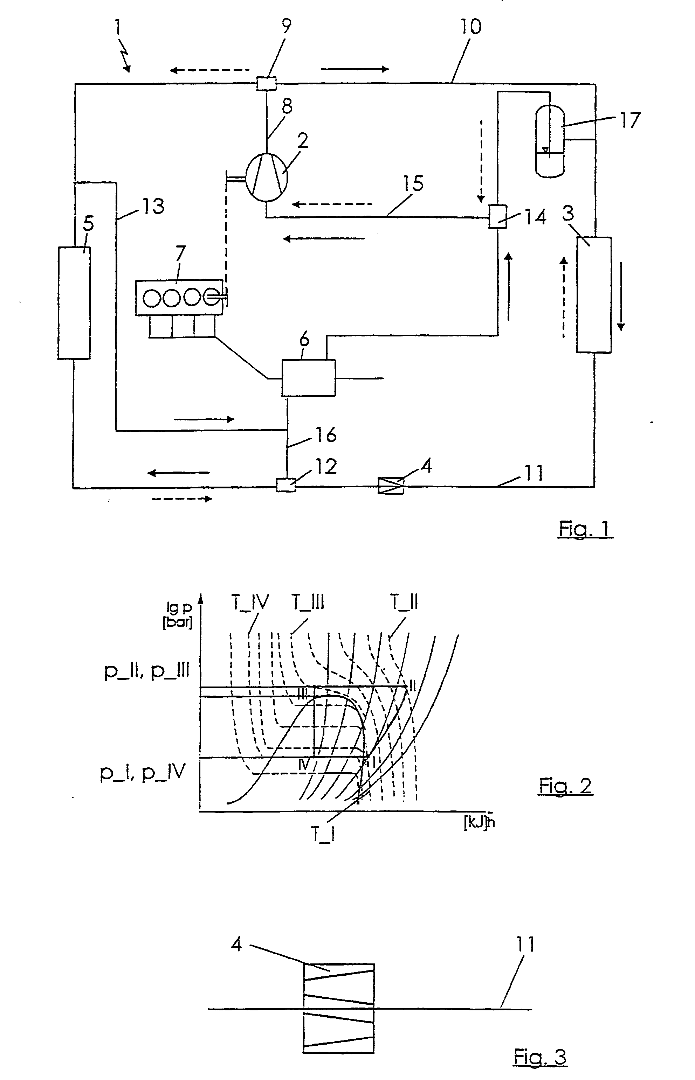

Fig. 1 zeigt eine schematisierte Darstellung eines unter transkritischen Prozessbedingungen betreibbaren Dampfkompressionskreislaufes bzw. Kreislaufes 1, der in Reihe geschaltet sukzessiv hintereinander einen Verdichter 2, einen Innenraum-Wärmetauscher 3, eine Drosseleinrichtung 4, einen Umgebungswärmetauscher 5 und einen als Gegenstromwärmetauscher ausgebildeten Abgaswärmetauscher 6 als Kreislaufkomponenten aufweist.

Der Kreislauf 1 kann sowohl zum Heizen als auch zum Kühlen eines Nutzraumes eines Kraftfahrzeuges mit einer Brennkraftmaschine 7 verwendet werden, wobei die durchgezogenen Pfeile die Strömungsrichtung des Kreislaufmediums im Heizbetrieb und die gestrichelt dargestellten Pfeile die Strömungsrichtung im Kühlbetrieb anzeigen. Das Kreislaufmedium wird von dem Verdichter 2, der von der Brennkraftmaschine 7 angetrieben wird, auf einen überkritischen Prozeßdruck komprimiert und gelangt in einer Leitung 8 zu einem 3/2 Wegeventil, welches als Modusweiche 9 für Kühl- oder Heizbetrieb des Kreislaufes 1 verwendet wird. Zusätzlich ist in dem Kreislauf 1 auf der Saugseite des Verdichters 2 ein Sammelbehälter 17 zur Aufnahme von überschüssigem Kreislaufmedium als Kreislaufkomponente in dem Kreislauf 1 enthalten.

Während des Heizbetriebes wird das Kreislaufmedium von der Modusweiche 9 ausgehend über eine Leitung 10 zu dem Innenraum-Wärmetauscher 3 geführt, welcher auf einer Hochdruckseite des Kreislaufes 1 angeordnet ist. Dort wird das Kreislaufmedium mit der dem Nutzraum zuzuführenden Nutzraumluft beaufschlagt, wobei die Nutzraumluft von dem Kreislaufmedium erwärmt wird. Das Kreislaufmedium gelangt über eine Leitung 11 zu der als Expansionsventil 4 ausgebildeten Drosseleinrichtung und strömt von dort über das 3/2 Wegeventil 12 zu dem Umgebungswärmetauscher 5, wo es mit Umgebungsluft beaufschlagt wird. In dem Expansionsventil 4 wird das Kreislaufmedium auf einen unterkritischen Prozeßdruck entspannt, so daß alle Kreislaufkomponenten zwischen dem Expansionsventil 4 und dem Verdichter 2 auf einer Niederdruckseite des Kreislaufes 1 während dem Heizbetrieb liegen.

Anschließend wird das Kreislaufmedium über eine Leitung 13 zu dem Abgaswärmetauscher 6 geführt und mit den heißen Abgasen der Brennkraftmaschine 7 erwärmt. Dann strömt das Kreislaufmedium über ein als 3/2 Wegeventil ausgebildetes Kreislaufventil 14 und eine Leitung 15 zu dem Verdichter 2, womit der Kreislauf 1 geschlossen ist.

Liegt die Temperatur des Kreislaufmediums während dem Heizbetrieb nach dem Expansionsventil 4 über der Umgebungstemperatur oder besteht die Gefahr der Vereisung am Umgebungswärmetauscher 5, wird mittels dem 3/2-Wegeventil 12 eine Bypassleitung 16 geöffnet und gleichzeitig die Leitung 13 verschlossen. In dieser Stellung des 3/2-Wegeventils 12 wird der Umgebungswärmetauscher 5 nicht mehr von dem Kreislaufmedium durchströmt.

Dadurch, daß der Umgebungswärmetauscher 5 nicht mehr von dem Kreislaufmedium durchströmt wird, wird ein Vereisen des Umgebungs wärmetauschers 5 auf einfach Art und Weise vermieden. Darüber hinaus wird dem Kreislaufmedium keine Wärmeenergie von der kühleren Umgebungsluft entzogen, so daß das Kreislaufmedium mit einer höheren Temperatur in den Abgaswärmetauscher 6 eintritt als es nach einer Abgabe von Wärmeenergie an die Umgebung der Fall wäre.

Dies ist gerade kurz nach Inbetriebnahme des Kraftfahrzeuges wichtig, da während dieser Betriebsphase die Abgastemperatur einen niedrigen Wert aufweist und damit nur eine geringe Wärmemenge zur Aufheizung des Kreislaufmediums im Abgaswärmetauscher 6 zur Verfügung steht.

Beim Kühlbetrieb wird das Kreislaufmedium durch den Verdichter 2, den Umgebungswärmetauscher 5, das Expansionventil 4 und den Innenraum-Wärmetauscher 3 geführt, wobei der Verdichter 2, der Umgebungswärmetauscher 5, das Expansionsventil 4 und der Innenraum-Wärmetauscher 3 in Reihe geschaltet sind und einen integralen geschlossenen Kreislauf 1 bilden. Auf der Hochdruckseite des Kreislaufs 1 wird ein überkritischer Druck und auf der Niederdruckseite des Kreislaufs 1 wird ein unterkritischer Druck erzeugt, wobei auf der Niederdruckseite dem Kreislaufmedium in dem Innenraum-Wärmetauscher 3 Wärmeenergie zugeführt wird.

Der Massenstrom des Kreislaufmediums wird im Kreislauf 1 durch Regulierung des Durchsatzes des Kreislaufmediums im Verdichter 2 variiert. Beim Heizbetrieb wird die Hochdruckseite des Kreislaufes 1 bei Kühlbetrieb zur Niederdruckseite und die Niederdruckseite des Kreislaufes 1 bei Kühlbetrieb zur Hochdruckseite. Das Kreislaufmedium wird somit während dem Heizbetrieb in dem Innenraum-Wärmetauscher 3 unter einem überkritischen Druck geführt und überträgt dabei Wärmeenergie auf die dem Nutzraum zuzuführende Nutzraumluft. Um die übertragbare Wärmemenge zu erhöhen, wird das Kreislaufmedium zusätzlich durch den Abgaswärmetauscher 6 geführt. Ebenso wie während des Kühlbetriebes wird der Massenstrom des Kreislaufmediums im Kreislauf 1 während des Heizbetriebes über die Durchsatzregelung des Verdichters 2 eingestellt.

Dabei können Parameter wie beispielsweise eine vorgegebene Temperatur des Nutzraumes oder eine geforderte Heiz- bzw. Kühlleistung als Regelgrößen dienen.

In Fig. 2 wird ein Enthalpie-Druck-Diagramm des Kreislaufs 1 während des Heizbetriebes gemäß Fig. 1 dargestellt, wobei bei einer Verdichtung des Kreislaufmediums im Verdichter 2, der Druck im Kreislauf 1 von einem Ausgangsdruck p_I auf einen überkritischen Druck p_II angehoben wird. Die Temperatur des Kreislaufmediums steigt dabei von einer Temperatur T_I auf eine Temperatur T_II an. Das komprimierte Kreislaufmedium wird dann in dem Innenraum-Wärmetauscher 3 von dem dem Nutzraum zugeführten Nutzraumluftstrom isobar auf eine Temperatur T_III abgekühlt. Danach wird der Prozeßdruck des Kreislaufmediums beim Durchströmen des Expansionsventils 4 isenthalp auf einen unterkritischen Druck p_IV entspannt, der dem Ausgangsdruck p_I entspricht. Das Kreislaufmedium kühlt dabei auf eine Temperatur T_IV ab, die im Naßdampfbereich des Kreislaufmediums liegt. Im Anschluß gelangt das Kreislaufmedium als Zweiphasen-Gemisch in den Umgebungswärmetauscher 5 und/oder in den Abgaswärmetauscher 6. Dort wird es mittels der Umgebungsluft und/oder den Abgasen der Brennkraftmaschine 7 erwärmt, so daß der Flüssigkeitsanteil des Kreislaufmediums verdampft.

Die vom Verdichter 2 in den Kreislauf 1 eingebrachte Wärmeleistung errechnet sich aus dem Produkt des Massenstromes des Kreislaufmediums und der Enthalpiedifferenz der Prozeßzustände I und II. Das Produkt aus der Differenz der spezifischen Enthalpien des Kreislaufmediums der Prozeßzustände IV und I und dem Massenstrom des Kreislaufmediums ergibt die im Umgebungswärmetauscher 5 auf einem niedrigem Temperaturniveau aufgenommene Wärmeleistung. Die in dem Innenraum-Wärmetauscher 3 auf die Nutzraumluft übertragene Wärmemenge ergibt sich bei Heizbetrieb aus dem Produkt der Enthalpiedifferenz zwischen den Zustandspunkten II und III in Fig. 2 und dem Massenstrom des Kreislaufmediums. Der Wert der spezifischen Enthalpie des Kreislaufmediums am Zustandspunkt 3 entspricht der dem Kreislaufmedium zugeführten Verdichtungsarbeit und der Enthalpiezunahme durch den Wärmeeintrag bei der Verdampfung in dem Umgebungswärmetauscher 5 und/oder dem Abgaswärmetauscher 6.

Eine die Effizienz von thermodynamischen Kreislaufprozessen beschreibende Größe ist der "**C**oefficient **o**f **P**erformance", **COP**, welcher als Verhältnis zwischen Nutzleistung (Kälte- oder Heizleistung) und aufgewendeter Verdichter-Antriebsleistung definiert ist. Je höher die Nutzleistung und je niedriger die aufzuwendende Antriebsleistung des Verdichters 2 ist, desto höher ist der COP.

Wird eine konstante Nutzleistung gewünscht, kann die Antriebsleistung des Verdichters 2 bei steigendem Wärmeangebot durch das Kreislaufmedium am Innenraum-Wärmetauscher 3 reduziert werden. Fällt dagegen die übertragbare Wärmemenge am Innenraum-Wärmetauscher 3 ab, wird mittels einer Regelung (nicht dargestellt) dem Verdichter 2 eine höhere Leistung zugeführt, damit die gewünschte Heizleistung zur Verfügung steht.

Bei konstantem Saugdruck und Hochdruck im Verdichter 2 ist die Antriebsleistung des Verdichters 2 von dem Massenstrom des Kreislaufmediums abhängig. Bei einer geringen Kühl- bzw. Heizleistung ist der erforderliche Massenstrom des Kreislaufmediums in dem Kreislauf 1 klein und bei einer geforderten hohen Kühl- bzw. Heizleistung ist der damit korrespondierende Massenstrom des Kreislaufmediums groß. Damit kann der Durchsatz des Kreislaufmediums durch den Verdichter 2 und der im Kreislauf 1 zirkulierende Massenstrom dem Bedarf an Heizwärme und dem Angebot an Niedertemperaturwärme gleichermaßen angepaßt werden.

In einer von dem vorliegenden Ausführungsbeispiel abweichenden Form des Kreislaufes 1 ist für die Einstellung eines bestimmten Druckniveaus in dem Kreislauf 1 eine nicht dargestellte Regelung vorgesehen, die das Expansionsventil 4 und den Verdichter 2 regelt. Dabei kann es vorgesehen sein, daß der Öffnungsquerschnitt des Expansionsventils 4 in der einfachsten Ausführung der Regelung um so weiter geöffnet wird, je höher der vom Verdichter 2 geförderte Massenstrom des Kreislaufmediums ist. Dabei kann zur Regelung des Durchsatzes des Verdichters 2 eine Verstelleinrichtung zur Verstellung des Verdichtungshubes vorgesehen sein.

Versuchsreihen haben ergeben, daß Kohlendioxid (CO₂) als Kreislaufmedium besonders geeignet ist, um den vorliegenden Kreislauf 1 mit einem guten Wirkungsgrad zu betreiben. Aufgrund der hohen volumetrischen Kälteleistung von Kohlendioxid ist ein geringerer Volumenstrom des Kreislaufmediums im Kreislauf 1 erforderlich und der Querschnitt der Leitungen 8, 10, 11, 13, 15, 16 ist erheblich kleiner als bei der Verwendung konventioneller Kältemittel. Des weiteren können aufgrund der geringeren Viskosität und der geringen Strömungsgeschwindigkeiten in den Leitungen 8, 10, 11, 13, 15, 16 auch verhältnismäßig lange Leitungen, insbesondere Saugleitungen, nahezu ohne Druckabfall durchströmt werden.

Beim Eintritt in den Innenraum-Wärmetauscher 3 wird das zweiphasige Kreislaufmedium während dem Kühlbetrieb des Kreislaufs 1 während dem Kühlbetrieb in verschiedene parallel angeordneten Leitungen (nicht dargestellt) des Innenraum-Wärmetauschers 3 verteilt. Somit ist sichergestellt, daß in jeder parallelen Leitung nur die Menge an Kreislaufmedium eingebracht wird, die auch verdampfen kann. Die Verteilung des Kreislaufmediums wird bei den aus dem Stand der Technik bekannten Verdampfern bzw. Wärmetauschern unterschiedlich durchgeführt, wobei viele bekannte Lösungen das Grundprinzip aufweisen, daß das Kreislaufmedium nach der Verteilung in die engen Leitungen bzw. Kapillaren in sehr viel größere Leitungsquerschnitte eingespritzt wird. Aufgrund der plötzlichen Erweiterung des Leitungsquerschnittes löst sich das Kreislaufmedium an der erweiterten Stelle von den Leitungswänden ab und verdampft aufgrund der plötzlichen Entspannung.

Im Betrieb des Kreislaufs 1 als Wärmepumpe bzw. im Heizbetrieb kehrt sich die Strömungsrichtung des Kreislaufmediums im Umgebungswärmetauscher 5 und im Innenraum-Wärmetauscher 3 um. Die Umkehrung verursacht im Innenraum-Wärmetauscher 3 eine plötzliche Querschnittsreduktion bzw. eine starke Einschnürung der Strömung des Kreislaufmediums, die hohe Druckabfälle und eine Reduzierung des COP zur Folge haben.

Somit ist es von Vorteil ein Kreislaufmedium, wie beispielsweise Kohlendioxid, zu verwenden, welches, wie oben bereits erwähnt, eine hohe volumetrische Kälteleistung besitzt, um die Druckverluste zu verringern. Um die gleiche Wärmemenge mittels eines Kreislaufmediums mit einer niedrigen volumetrischen Kälteleistung zu transportieren, ist ein wesentlich größerer Volumenstrom des Kreislaufmediums notwendig, der wiederum die Reibungsverluste in den Kreislaufmedium führenden Leitungen 8, 10, 11, 13, 15, 16 und die Druckverluste im Innenraum-Wärmetauscher 3 unnötigerweise erhöhen würde.

Bei der Verwendung von CO₂ als Kreislaufmedium können aufgrund der geringen Viskosität von CO₂ und den geringen Strömungsgeschwindigkeiten, die aus den geringen Volumenströmen resultieren, in den Leitungen auch verhältnismäßig lange Leitungen, insbesondere Saugleitungen, nahezu ohne Druckabfall durchströmt werden.

Ein weiterer Vorteil von Kohlendioxid ist, daß es sich auch bei hohen Prozeßtemperaturen inert verhält. Das bedeutet, daß im Beisein von Kohlendioxid erst bei hohen Temperaturen irreversible Veränderungen durch Überhitzungen an Beimischungen im Kreislauf 1 stattfinden. Darüber hinaus ist Kohlendioxid ein ungiftiger, umweltverträglicher und nicht brennbarer Stoff, der ohne Sicherheitsbedenken in einem Kraftfahrzeug eingesetzt werden kann.

Im Vergleich zu einem Referenz-Kältekreislauf in Wärmepumpenschaltungen, der mit einem Fluor-Kohlenwasserstoff (R134a) als Kreislaufmedium betrieben wird, zeigt der transkritische Kältekreislauf mit CO₂ in einem technisch sinnvollen Temperaturbereich der Wärmequelle gleiche oder bessere Leistungsziffern. Der Unterschied tritt stärker hervor, je niedriger die Temperatur bei der Wärmeaufnahme ist. Dies liegt im wesentlichen im höheren Druckverhältnis des Referenz-Prozesses begründet, welches einen geringeren isentropen Verdichterwirkungsgrad nach sich zieht.

Transkritische Kältekreisläufe sind sehr gute Systeme für Anwendungen, in denen eine hohe Temperatursprei zung zur Wärmeabgabe vorteilhaft und eine Wärmequelle mit nahezu konstanter Temperatur verfügbar ist. Dieses ist in einem Kraftfahrzeug mit dem aufzuheizenden Luftstrom für den Fahrzeuginnenraum und einer Wärmeaufnahme aus der Umgebung und/oder den Abgasen der Fall.

Für einen verkehrssicheren Betrieb des Kraftfahrzeugs muß die Frontscheibe beschlagfrei gehalten und im Bedarfsfall enteist werden können. Hierzu wird ein Luftstrom an die Frontscheibe gelenkt, der über eine Temperatur, vorzugsweise höher 30 °C, verfügt.

Ein Kriterium für eine komfortable Beheizung des Nutzraumes ist, daß diese mit einem mittleren Durchsatz an Nutzraumluft durch den Nutzraum bzw. die Kabine durchführbar ist. Damit die notwendige Heizleistung übertragen werden kann, muß der Luftstrom der Nutzraumluft eine hohe Temperatur annehmen. Somit bestimmt die Temperatur des Kreislaufmediums bei der Wärmeabgabe im Innenraum-Wärmetauscher 3 den Grad des erreichbaren Komforts im Nutzraum des Fahrzeuges. Die Temperatur des Kreislaufmediums am Eintritt und am Austritt des als Kreuzstrom-Wärmetauscher ausgebildeten Innenraum-Wärmetauschers 3 sollte mindestens 20 °C über der gewünschten Temperatur des Nutzraumes liegen. Um diese Vorgabe zu erreichen ist es vorteilhaft, das Kreislaufmediums bei der Wärmeabgabe in dem Innenraum-Wärmetauscher 3 überkritisch zu halten.

Der Druck im Innenraum-Wärmetauscher 3 darf aber aus Sicherheitsgründen den Wert eines zulässigen Druckes nicht übersteigen. Dabei ist zu berücksichtigen, daß sich der Kreislauf 1 bzw. die Kreislaufkomponenten selbst im Stillstand des Kraftfahrzeuges durch Sonneneinstrahlung, Abstrahlung von heißen Motorteilen, Fertigungsabläufen bei Nachlackierungen am Fahrzeug etc. aufheizen können, wobei das in der Anlage enthaltene Kreislaufmedium verdampft wird und sich isochor ausdehnt. Abhängig von einem Volumen des Kreislaufs 1 ist bei einer Bauteiltemperatur von 80 ° - 90 °C eine Ruhedruckerhöhung auf 80 - 90 bar in dem Kreislauf 1 zu erwarten. Alle Kreislaufkomponenten der transkritisch betreibbaren Vorrichtung, insbesondere der Innenraum-Wärmetauscher 3, müssen unter Berücksichtigung geeigneter Sicherheitszuschläge einem Druck von 90 bar sicher widerstehen.

Eine druckfeste Ausführung von Komponenten ist ein bestimmender Faktor für das Komponentengewicht, denn ein hoher Prozeßdruck erfordert als konstruktive Maßnahme in seiner einfachsten Form dickere Wandstärken, welche wiederum ein höheres Gewicht der Vorrichtung verursachen.

Es ist daher aus Gewichtsgründen vorteilhaft, den maximal zulässigen Prozeßdruck in dem Kreislauf 1 des auf einen Wert korrespondierend mit dem maximal auftretenden Ruhedruck im Fahrzeugkältekreislauf zu begrenzen.

Die Werkstoffe, aus denen die die Nutzraumluft führenden Kanäle (nicht dargestellt) beim Stand der Technik hergestellt werden, sind in ihrer Temperaturbeständigkeit begrenzt. So nimmt die Materialfestigkeit z.B. bei PP-Werkstoffen ab ca. 100 °C rasch ab. Die Zugfestigkeit von den für die Herstellung des Innenraum-Wärmetauschers 3 und der Leitungen 8, 10, 11, 13, 15, 16 verwendeten Aluminiumwerkstoffe fällt bei einer Temperaturerhöhung von 20 °C auf 100 °C deutlich ab. Weiter steigende Temperaturen ziehen einen überproportionalen Festigkeitsabfall nach sich. Um weiterhin kostengünstige und recyclingfähige Werkstoffe verwenden zu können, ist eine Begrenzung der oberen Verdichtungstemperatur des Kreislaufmediums vorteilhaft. Somit kann eine thermische Überlasrung der Luftführungskanäle sowie der Einsatz temperaturbeständiger kostenintensiver Werkstoffe vermieden werden. Darüber hinaus sollte eine obere Temperatur der Nutzraumluft, die in den Nutzraum des Kraftfahrzeuges eingeleitet wird, 80 °C nicht übersteigen, da höhere Lufttemperaturen von den Fahrzeuginsassen schnell als schmerzhaft empfunden werden.

Der Durchsatz des durch den Innenraum-Wärmetauscher 3 geleiteten Nutzraumluftmassenstromes kann in einer weiteren, nicht näher dargestellten Ausführungsvariante der vorliegenden Erfindung in dem Innenraum-Wärmetauscher 3 derart eingestellt werden, daß der Druck auf der Hochdruckseite des Kreislaufes 1 während dem Heizbetrieb auf einen festgelegten Druck geregelt wird. Die Einstellung des Durchatzes der Nutzraumluft kann dabei auf einfache Art und Weise mittels der Variation des Luftdurchsatzes in dem Innenraum-Wärmetauscher 3 über ein aus dem Stand der Technik bekanntes Gebläse der Belüftungseinrichtung des Kraftfahrzeuges erfolgen. Eine weitere Möglichkeit zur Regelung des Durchsatzes der Nutzraumluft kann mittels verstellbarer Luftklappen in den Nutzraumluft führenden Kanälen der Belüftungseinrichtung erfolgen.

Mit diesen Maßnahmen wird erreicht, daß das Kreislaufmedium im Innenraum-Wärmetauscher 3 keinem Phasenwechsel unterliegt bzw. der Prozeßdruck nicht unter einen überkritischen Druck absinkt, so daß die oben beschriebenen Vorteile eines überkritischen Prozesses nutzbar sind.

Das Expansionsventil 4 kann, wie in Fig. 3 schematisch dargestellt, in einer vorteilhaften Ausgestaltung als ein in einer räumlichen Einheit ausgeführtes kombiniertes Expansionsventil ausgebildet sein. Diese Ausführung ist zur Expansion des Kreislaufmediums in beide Strömungsrichtungen schaltbar.

## Patentansprüche

1. Verfahren zum Heizen und Kühlen eines Nutzraumes eines von einer Brennkraftmaschine (7) angetriebenen Kraftfahrzeuges mit folgenden Verfahrensschritten:
a) beim Kühlbetrieb wird ein Kreislaufmedium durch einen Verdichter (2), einen Umgebungswärmetauscher (5), eine Drosseleinrichtung (4) und einen Innenraum-Wärmetauscher (3) geführt, die in Reihe geschaltet sind und einen integralen geschlossenen Kreislauf (1) bilden, wobei
b) auf einer Hochdruckseite des Kreislaufs (1) ein überkritischer Druck und gleichzeitig auf einer Niederdruckseite des Kreislaufs (1) ein unterkritischer Druck erzeugt wird, wobei
c) auf der Niederdruckseite des Kreislaufs (1) dem Kreislaufmedium über den Innenraum-Wärmetauscher (3) Wärmeenergie zugeführt wird, und wobei
d) der Massenstrom des Kreislaufmediums im Kreislauf (1) durch Regulierung des Durchsatzes des Kreislaufmediums im Verdichter (2) variiert wird;
e) beim Heizbetrieb wird das Kreislaufmedium seriell durch den Verdichter (2), den Innenraum-Wärmetauscher (3), die Expansionseinrichtung (4) den Umgebungswärmetauscher (5) und/oder einen Abgaswärmetauscher (6) geführt, so daß die Hochdruckseite des Kreislaufes (1) bei Kühlbetrieb zur Niederdruckseite und die Niederdruckseite des Kreislaufes (1) bei Kühlbetrieb zur Hochdruckseite wird, wobei
f) das Kreislaufmedium in dem Innenraum-Wärmetauscher (3) unter einem überkritischen Druck geführt wird und von dem Kreislaufmedium Wärmeenergie auf die dem Nutzraum zuzuführende Nutzraumluft übertragen wird, wobei
g) der Massenstrom des Kreislaufmediums im Kreislauf (1) durch Regulierung des Durchsatzes des Kreislaufmediums im Verdichter (2) geregelt wird, und wobei
h) der Druck in dem Innenraum-Wärmetauscher (3) auf einen Wert unterhalb eines zulässigen Druckes geregelt wird.

2. Verfahren nach Anspruch 1,
**dadurch gekennzeichnet, daß** der in dem Kreislauf (1) zirkulierende Massenstrom des Kreislaufmediums zusätzlich mittels der Drosseleinrichtung (4) geregelt wird.

3. Verfahren nach Anspruch 1 oder 2,
**dadurch gekennzeichnet, daß**
zur Regelung des Durchsatzes des Kreislaufmediums ein Drosselquerschnitt der Drosseleinrichtung (4) variiert wird.

4. Verfahren nach einem der Ansprüche 1 bis 3,
**dadurch gekennzeichnet, daß** der Durchsatz des Verdichters (2) in Abhängigkeit einer vorgegebenen Temperatur eines Nutzraumes des Kraftfahrzeuges geregelt wird.

5. Verfahren nach Anspruch 4,
**dadurch gekennzeichnet, daß** der Durchsatz des Verdichters (2) in Abhängigkeit einer vorgegebenen Heizleistung geregelt wird.

6. Verfahren nach einem der Ansprüche 1 bis 5,
**dadurch gekennzeichnet, daß** der Verdichter (2) von der Brennkraftmaschine (7) des Kraftfahrzeuges angetrieben wird.

7. Verfahren nach einem der Ansprüche 1 bis 6,
**dadurch gekennzeichnet, daß** als Kreislaufmedium ein umweltverträgliches, nicht brennbares, ungiftiges und im Fahrzeugbetrieb unter transkritischen Zustandsbedingungen arbeitendes Kältemittel, vorzugsweise CO₂, verwendet wird.

8. Vorrichtung zum Heizen und Kühlen eines Ivutzraumes eines von einer Brennkraftmaschine angetriebenen Kraftfahrzeuges, insbesondere zur Durchführung des Verfahrens nach einem der Ansprüche 1 bis 6, welche einen Kreislauf mit einem Verdichter, einem Umgebungswärmetauscher, einer Drosseleinrichtung, einem Innenraum-Wärmetauscher und einen von den Abgasen der Brennkraftmaschine beheizbaren Abgaswärmetauscher aufweist,
**dadurch gekennzeichnet, daß** im Heizbetrieb der Verdichter (2), der Innenraum-Wärmetauscher (3), die Drosseleinrichtung (4), der Umgebungswärmetauscher (5) und der Abgaswärmetauscher (6) seriell derart angeordnet sind, daß ein Kreislaufmedium in der Drosseleinrichtung (4) auf eine Temperatur unterhalb einer Ansaugtemperatur des Kreislaufmediums in dem Verdichter (2) expandierbar, in dem Umgebungswärmetauscher (5) mit Umgebungsluft beaufschlagbar, in dem Abgaswärmetauscher (6) mit den Abgasen der Brennkraftmaschine (7) erhitzbar und in dem Verdichter (2) komprimierbar ist, und daß im Kühlbetrieb der Verdichter (2), der Umgebungswärmetauscher (5), die Drosseleinrichtung (4), und der Innenraum-Wärmetauscher (3) seriell angeordnet sind, wobei das Kreislaufmedium in dem Umgebungswärmetauscher (5) mit Umgebungsluft beaufschlagbar und in der Drosseleinrichtung (4) auf eine Temperatur unterhalb einer Nutzraumlufttemperatur expandierbar ist, und daß die Nutzraumluft in dem Innenraum-Wärmetauscher (3) mit dem Kreislaufmedium beaufschlagbar ist.

9. Vorrichtung nach Anspruch 8,
**dadurch gekennzeichnet, daß** zwischen der Drosseleinrichtung (4) und dem Abgaswärmetauscher (6) eine absperrbare Bypassleitung (16) derart vorgesehen ist, daß das Kreislaufmedium unter Umgehung des Umgebungswärmetauschers (5) direkt in den Abgaswärmetauscher (6) führbar ist.

10. Vorrichtung nach Anspruch 8 oder 9,
**dadurch gekennzeichnet, daß** die Drosseleinrichtung (4) durchsatzregelbar ist.

11. Vorrichtung nach einem der Ansprüche 8 bis 10,
**dadurch gekennzeichnet, daß** der Abgaswärmetauscher (6) als Gegenstromwärmetauscher ausgebildet ist.

12. Vorrichtung nach einem der Ansprüche 8 bis 11,
**dadurch gekennzeichnet, daß** die Drosseleinrichtung als Expansionsventil (4) ausgebildet ist.

13. Vorrichtung nach Anspruch 12,
**dadurch gekennzeichnet, daß** das Expansionsventil (4) in einer Leitung (11) als ein in einer räumlichen Einheit ausgeführtes kombiniertes Expansions- und Rückschlagventil angeordnet ist, welches derart ausgebildet ist, daß es zur Expansion des Kreislaufmediums in beide Strömungsrichtungen schaltbar ist und jeweils in der der Strömungsrichtung des Kreislaufmediums entgegengesetzten Richtung versperrbar ist.

14. Vorrichtung nach einem der Ansprüche 8 bis 13,
**dadurch gekennzeichnet, daß** auf der Saugseite des Verdichters (2) im Kreislauf (1) ein Sammelbehälter (17) zur Aufnahme des Kreislaufmediums vorgesehen ist.

15. Vorrichtung nach einem der Ansprüche 8 bis 14,
**dadurch gekennzeichnet, daß** der Verdichter (2) eine Verstelleinrichtung zur Verstellung des Verdichtungshubes aufweist.

## Claims

1. Method for heating and cooling a usable space of a motor vehicle driven by an internal combustion engine (7), comprising the following steps:
a) in the cooling mode, a circuit medium is routed through a compressor (2), an ambient heat exchanger (5), a restrictor (4) and an interior heat exchanger (3), these components being connected in series and forming an integral closed circuit (1), wherein
b) a supercritical pressure is generated on a high-pressure side of the circuit (1) while a subcritical pressure is at the same time generated on a low-pressure side of the circuit (1), wherein
c) thermal energy is supplied to the circuit medium on the low-pressure side of the circuit (1) via the interior heat exchanger (3), and wherein
d) the mass flow rate of the circuit medium in the circuit (1) is varied by controlling the throughput of circuit medium in the compressor (2);
e) in the heating mode, the circuit medium is serially routed through the compressor (2), the interior heat exchanger (3), the expansion unit (4), the ambient heat exchanger (5) and/or an exhaust heat exchanger (6), so that the high-pressure side of the circuit (1) in the cooling mode becomes the low-pressure side and the low-pressure side of the circuit (1) in the cooling mode becomes the high-pressure side, wherein
f) the circuit medium in the interior heat exchanger (3) is circulated at a supercritical pressure and thermal energy is transferred from the circuit medium to the air to be supplied to the usable space, wherein
g) the mass flow rate of the circuit medium in the circuit (1) is varied by controlling the throughput of circuit medium in the compressor (2), and wherein
h) the pressure in the interior heat exchanger (3) is adjusted to a value below a permissible pressure.

2. Method according to claim 1,
**characterised in that** the mass flow rate of the circuit medium circulating in the circuit (2) is additionally controlled by means of the restrictor (4).

3. Method according to claim 1 or 2,
**characterised in that** the throughput of circuit medium is controlled by varying the cross-section of the restrictor (4).

4. Method according to any of claims 1 to 3,
**characterised in that** the throughput of the compressor (2) in controlled in dependence on a preset temperature of a usable space of the motor vehicle.

5. Method according to claim 4,
**characterised in that** the throughput of the compressor (2) is controlled in dependence on a preset heating power.

6. Method according to any of claims 1 to 5,
**characterised in that** the compressor (2) is driven by the internal combustion engine (7) of the motor vehicle.

7. Method according to any of claims 1 to 6,
**characterised in that** an environmentally compatible, non-combustible, nontoxic refrigerant operating under transcritical state conditions in vehicle operation, preferably CO₂, is used as a circuit medium.

8. Device for heating and cooling a usable space of a motor vehicle driven by an internal combustion engine, in particular for executing the method according to any of claims 1 to 6, comprising a circuit with a compressor, an ambient heat exchanger, a restrictor, an interior heat exchanger and an exhaust heat exchanger capable of being heated by the exhaust gases of the internal combustion engine,
**characterised in that**, in the heating mode, the compressor (2), the interior heat exchanger (3), the restrictor (4), the ambient heat exchanger (5) and the exhaust heat exchanger (6) are connected in series, so that a circuit medium can be expanded in the restrictor (4) to a temperature below an intake temperature of the circuit medium in the compressor (2), pressurised in the ambient heat exchanger (5) by ambient air, heated in the exhaust heat exchanger (6) by the exhaust gases of the internal combustion engine (7) and compressed in the compressor (2), and **in that**, in the cooling mode, the compressor (2), the ambient heat exchanger (5), the restrictor (4) and the interior heat exchanger (3) are connected in series, wherein the circuit medium can be pressurised in the ambient heat exchanger (5) by ambient air and expanded in the restrictor (4) to a temperature below a temperature prevailing in the usable space, and **in that** the air in the usable space can be pressurised in the interior heat exchanger (3) by the circuit medium.

9. Device according to claim 8,
**characterised in that** a blockable bypass line (16) is provided between the restrictor (4) and the exhaust heat exchanger (6), enabling the circuit medium to flow directly into the exhaust heat exchanger (6) while bypassing the ambient heat exchanger (5).

10. Device according to claim 8 or 9,
**characterised in that** the restrictor (4) is throughput-controllable.

11. Device according to any of claims 8 to 10,
**characterised in that** the exhaust heat exchanger (6) is designed as a countercurrent heat exchanger.

12. Device according to any of claims 8 to 11,
**characterised in that** the restrictor is designed as an expansion valve (4).

13. Device according to claim 12,
**characterised in that** the expansion valve (4) is located in a line (11) and designed as an expansion and check valve combined in a spatial unit, which is designed for switching in both flow directions to expand the circuit medium and blockable in the direction opposite to the flow direction of the circuit medium.

14. Device according to any of claims 8 to 13,
**characterised in that** a receiver tank (17) is provided in the circuit (1) on the intake side of the compressor (2) to receive the circuit medium.

15. Device according to any of claims 8 to 14,
**characterised in that** the compressor (2) incorporates an adjusting device for adjusting the compressor stroke.

## Revendications

1. Procédé pour le chauffage et le refroidissement d'un espace utile d'un véhicule automobile entraîné par un moteur à combustion interne (7) présentant les étapes de procédé suivantes :
a) lors du fonctionnement en refroidissement, un fluide de circuit est guidé par un compresseur (2), un échangeur de chaleur pour l'environnement (5), un dispositif d'étranglement (4) et un échangeur de chaleur pour l'habitacle (3), qui sont montés en série et forment un circuit (1) fermé intégral,
b) une pression surcritique étant générée sur un côté haute pression du circuit (1) et une pression souscritique étant générée simultanément sur un côté basse pression du circuit (1),
c) de l'énergie de chaleur étant amenée du côté basse pression du circuit (1) au fluide de circuit par l'intermédiaire de l'échangeur de chaleur pour l'habitacle (3), et
d) le flux massique du fluide de circuit dans le circuit (1) étant modifié par le réglage de débit du fluide de circuit dans le compresseur (2) ;
e) lors du fonctionnement en chauffage, le fluide de circuit est guidé en série par le compresseur (2), l'échangeur de chaleur pour l'habitacle (3), le système d'expansion (4), l'échangeur de chaleur pour l'environnement (5) et/ou un échangeur de chaleur pour gaz brûlés (6), de sorte que le côté haute pression du circuit (1) devient le côté basse pression lors du fonctionnement de refroidissement et le côté basse pression du circuit (1) devient le côté haute pression lors du fonctionnement en refroidissement,
f) le fluide du circuit étant guidé dans l'échangeur de chaleur pour l'habitacle (3) sous une pression surcritique et de l'énergie de chaleur étant transmise du fluide du circuit à l'air de l'espace utile à amener à l'espace utile,
g) le flux massique du fluide de circuit étant réglé dans le circuit (1) par le réglage du débit du fluide de circuit dans le compresseur (2), et
h) la pression dans l'échangeur de chaleur pour l'habitacle (3) étant réglée sur une valeur située au-dessous d'une pression autorisée.

2. Procédé selon la revendication 1, **caractérisé en ce que** le flux massique, circulant dans le circuit (1), du fluide de circuit est réglé en supplément au moyen du dispositif d'étranglement (4).

3. Procédé selon la revendication 1 ou 2, **caractérisé en ce qu'**on fait varier une section d'étranglement du dispositif d'étranglement (4) pour le réglage du débit du fluide de circuit.

4. Procédé selon l'une quelconque des revendications 1 à 3, **caractérisé en ce que** le débit du compresseur (2) est réglé en fonction d'une température prédéfinie d'un espace utile du véhicule automobile.

5. Procédé selon la revendication 4, **caractérisé en ce que** le débit du compresseur (2) est réglé en fonction d'une puissance de chauffage prédéfinie.

6. Procédé selon l'une quelconque des revendications 1 à 5, **caractérisé en ce que** le compresseur (2) est entraîné par le moteur à combustion interne (7) du véhicule automobile.

7. Procédé selon l'une quelconque des revendications 1 à 6, **caractérisé en ce qu'**on utilise comme fluide de circuit un réfrigérant compatible avec l'environnement, non combustible, non toxique et travaillant lors du fonctionnement du véhicule dans des conditions d'état transcritiques, de préférence du CO₂.

8. Dispositif pour le chauffage et le refroidissement d'un espace utile d'un véhicule automobile entraîné par un moteur à combustion interne, en particulier pour la mise en oeuvre du procédé selon l'une quelconque des revendications 1 à 6, qui présente un circuit avec un compresseur, un échangeur de chaleur pour l'environnement, un dispositif d'étranglement, un échangeur de chaleur pour l'habitacle et un échangeur de chaleur de gaz brûlés pouvant être chauffé par les gaz brûlés du moteur à combustion interne, **caractérisé en ce que**, lors du fonctionnement de chauffage, le compresseur (2), l'échangeur de chaleur pour l'habitacle (3), le dispositif d'étranglement (4), l'échangeur de chaleur pour l'environnement (5) et l'échangeur de chaleur pour gaz brûlés (6) sont disposés en série de telle sorte qu'un fluide de circuit est expansible dans le dispositif d'étranglement (4) jusqu'à une température inférieure à une température d'admission du fluide de circuit dans le compresseur (2), peut être sollicité dans l'échangeur de chaleur pour l'environnement (5) avec de l'air ambiant, peut être chauffé dans l'échangeur de chaleur pour gaz brûlés (6) avec les gaz brûlés du moteur à combustion interne (7) et peut être comprimé dans le compresseur (2), et **en ce que**, lors du fonctionnement de refroidissement, le compresseur (2), l'échangeur de chaleur pour l'environnement (5), le dispositif d'étranglement (4), et l'échangeur de chaleur pour l'habitacle (3) sont disposés en série, le fluide de circuit pouvant être sollicité dans l'échangeur de chaleur pour l'environnement (5) avec de l'air ambiant et étant expansible dans le dispositif d'étranglement (4) jusqu'à une température inférieure à une température ambiante de l'espace utile, et **en ce que** l'air de l'espace utile peut être sollicité avec le fluide de circuit dans l'échangeur de chaleur pour l'habitable (3).

9. Dispositif selon la revendication 8, **caractérisé en ce qu'**il est prévu entre le dispositif d'étranglement (4) et l'échangeur de chaleur pour gaz brûlés (6) une conduite de dérivation (16) pouvant être fermée de telle sorte que le fluide de circuit peut être guidé directement dans l'échangeur de chaleur pour gaz brûlés (6) en contournant l'échangeur de chaleur pour l'environnement (5).

10. Dispositif selon la revendication 8 ou 9, **caractérisé en ce que** le dispositif d'étranglement (4) peut être réglé au niveau du débit.

11. Dispositif selon l'une quelconque des revendications 8 à 10, **caractérisé en ce que** l'échangeur de chaleur pour gaz brûlés (6) est conçu comme un échangeur de chaleur à contre-courant.

12. Dispositif selon l'une quelconque des revendications 8 à 11, **caractérisé en ce que** le dispositif d'étranglement est conçu comme une soupape d'expansion (4).

13. Dispositif selon la revendication 12, **caractérisé en ce que** la soupape d'expansion (4) est disposée dans une conduite (11) comme une vanne d'expansion et une vanne anti-retour combinée et réalisée dans une unité dans l'espace, qui est conçue de telle sorte qu'elle peut être commutée dans les deux sens d'écoulement pour l'expansion du fluide de circuit et peut être fermée respectivement dans le sens opposé au sens d'écoulement du fluide de circuit.

14. Dispositif selon l'une quelconque des revendications 8 à 13, **caractérisé en ce qu'**un réservoir collecteur (17) pour le logement du fluide de circuit est prévu sur le côté admission du compresseur (2) dans le circuit (1).

15. Dispositif selon l'une quelconque des revendications 8 à 14, **caractérisé en ce que** le compresseur (2) présente un dispositif de réglage pour le réglage de la course de compression.
